# FASCICULE DE BREVET EUROPEEN

(11) **EP 0 484 256 B1**
(45) Date de publication et mention de la délivrance du brevet: **13.12.1995**
(21) Numéro de dépôt: 91420383.1
(22) Date de dépôt: 25.10.1991
(51) Int. Cl.: G11B 15/12, G11B 15/02

(54) **Dispositif de commutation d'une bobine**
Schaltungsgerät für eine Spule
Coil switching device

(30) Priorité: 29.10.1990 FR 9013740
(43) Date de publication de la demande: 06.05.1992
(73) Titulaire: SGS-THOMSON MICROELECTRONICS S.A., 94250 Gentilly (FR)
(72) Inventeur: Perroud, Philippe, F-38240 Meylan (FR)
(74) Mandataire: de Beaumont, Michel

(56) Documents cités:
- EP-A- 0 115 212
- EP-A- 0 334 775
- US-A- 3 959 817
- US-A- 4 665 446
- US-A- 4 868 691
- INTERNATIONAL CONFERENCE ON CONSUMER ELECTRONICS, Juin 1988, ROSEMONT, USA pages 28 - 29; V. DUFOSSEZ: 'A LOW NOISE ONE CHIP PLAY BACK RECORD HEAD AMPLIFIER FOR VCR'
- IEEE TRANSACTIONS ON CONSUMER ELECTRONICS, vol. CE-24, no. 3, Août 1978, NEW YORK US pages 318 - 327; STEPHEN HOBRECHT: 'ELECTRONICALY SWITCHED TAPE AUDIO PROCESSOR'
- PATENT ABSTRACTS OF JAPAN vol. 7, no. 30 (P-173)(1175) 5 Février 1983 & JP-A- 57 183 606 ( HITACHI ) 12 Novembre 1982

## Description

La présente invention concerne un dispositif de commutation d'une bobine entre un état où elle est alimentée et un état où elle est utilisée comme récepteur. La présente invention vise plus particulièrement la commutation d'une bobine de tête de lecture/écriture de magnétoscope.

Dans l'état de lecture, l'une des bornes de la bobine est placée à la masse et la tension sur l'autre borne est détectée. Dans l'état d'écriture, la borne qui était à la masse est connectée à une source de courant et l'autre borne est reliée à une tension d'alimentation, des moyens étant prévus pour moduler la source de courant et faire passer dans la bobine un courant en fonction du signal à enregistrer.

Quand on veut passer d'un état à l'autre, la bobine est soumise à deux dangers pouvant causer sa détérioration : elle peut se trouver brièvement branchée entre la masse et la tension d'alimentation, ce qui provoquerait une forte surintensité car elle est à faible impédance, et elle peut être traversée par un pic de courant de décharge d'une capacité de couplage à un amplificateur, comme on le verra plus loin.

Dans l'art antérieur, pour résoudre ces problèmes, on est généralement arrivé à des dispositifs difficilement intégrables et comprenant un grand nombre d'interrupteurs dont le fonctionnement devait être soigneusement synchronisé par des procédés complexes.

La demande de brevet FR-A-2 628 877 déposée le 18 mars 1988 vise à prévoir un dispositif de commutation particulièrement simple, comprenant un petit nombre d'interrupteurs, et facilement intégrable. Le circuit de ce document ne comporte que deux interrupteurs, mais un de ces interrupteurs, ainsi que trois composants voisins, ne sont pas intégrés. La présente invention vise à supprimer les composants externes.

Pour atteindre ces objets ainsi que d'autres, la présente invention prévoit un dispositif de commutation d'une bobine entre un premier état où elle est connectée entre une source d'alimentation et la masse par l'intermédiaire d'une source de courant modulable et un second état où elle est connectée entre la masse et l'entrée d'un amplificateur par l'intermédiaire d'une capacité de couplage, comprenant un premier interrupteur commandé connecté en parallèle sur la source de courant ; un deuxième interrupteur commandé disposé entre la source d'alimentation et la bobine ; un comparateur à seuil dont les entrées sont branchées aux bornes de la capacité ; un circuit logique de commande recevant un signal de commande d'état présentant un front montant ou un front descendant lors d'un changement d'état et le signal de sortie du comparateur à seuil et pilotant en fonction de ces signaux lesdits interrupteurs alternativement et sans recouvrement à la fermeture.

Selon un mode de réalisation de la présente invention, quand survient un front donné du signal de commande correspondant à la commande de passage du second état (PB) au premier état (REC), le circuit de commande ouvre aussitôt le premier interrupteur et ferme le deuxième interrupteur après un intervalle de temps prédéterminé.

Selon un mode de réalisation de la présente invention, quand survient l'autre front du signal de commande correspondant à la commande de passage du premier état (REC) au second état (PB), le circuit de commande ouvre aussitôt le deuxième interrupteur et ferme le premier interrupteur quand le comparateur à seuil bascule à un état donné.

Selon un mode de réalisation de la présente invention, le comparateur à seuil bascule audit état donné quand la tension aux bornes de la capacité de couplage devient inférieure à une tension seuil positive prédéterminée.

Selon un mode de réalisation de la présente invention, la tension aux bornes de la capacité de couplage atteint la tension de seuil prédéterminée par valeur décroissante un deuxième intervalle de temps après l'ouverture du deuxième interrupteur.

Selon un mode de réalisation de la présente invention, le deuxième intervalle de temps est la somme d'un troisième intervalle de temps dépendant du temps de décharge de la capacité à travers la source de courant jusqu'à un niveau prédeterminé et d'un quatrième intervalle de temps dépendant du temps de décharge du condensateur à travers une résistance de polarisation de l'amplificateur jusqu'à ce que la tension aux bornes du condensateur soit égale à la tension de seuil du comparateur à seuil.

Ces objets, caractéristiques et avantages ainsi que d'autres de la présente invention seront exposés plus en détail dans la description suivante de modes de réalisation particuliers faites en relation avec les figures jointes parmi lesquelles :
la figure 1 représente un mode de réalisation de la présente invention ; et
la figure 2 représente des chronogrammes illustrant le fonctionnement du circuit de la figure 1.

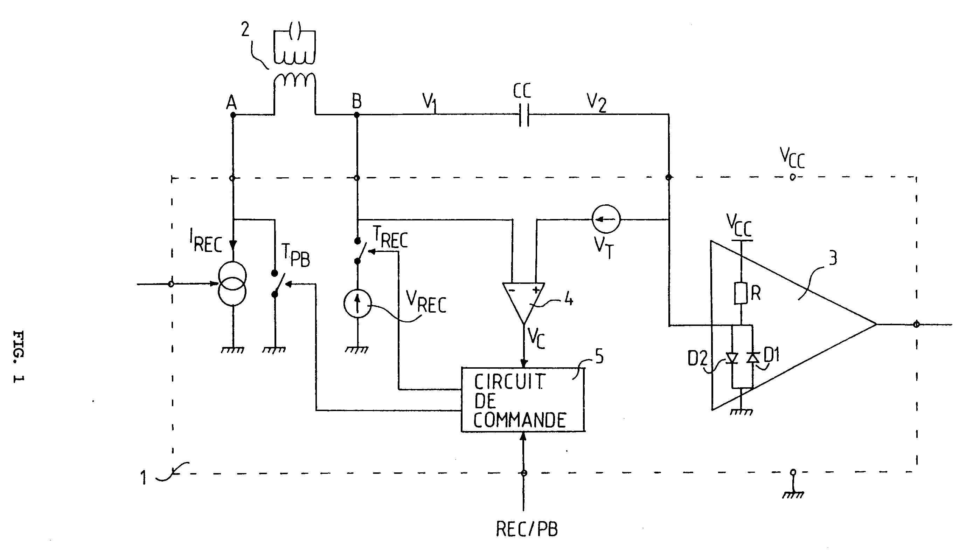

La figure 1 représente un circuit intégré 1 comprenant, entre autres, tous les éléments nécessaires à la commutation d'une bobine, ici une tête de lecture/écriture 2 de magnétoscope. Les seuls éléments externes inévitables sont la tête 2 et une capacité de couplage CC. Une première borne A de la tête 2 est connectée à une source de courant I_{REC}, modulable par un signal externe, reliée à la masse et qui peut être court-circuitée par un interrupteur commandable T_{PB}. La deuxième borne B de la tête est connectée à une source de tension V_{REC} par l'intermédiaire d'un deuxième interrupteur commandable T_{REC}. La borne B est aussi couplée à l'entrée d'un amplificateur de lecture 3 par l'intermédiaire de la capacité de couplage CC.

Un comparateur 4 compare la tension V₁-V₂ aux bornes du condensateur CC à une tension de seuil positive fixe V_{T} obtenue, par exemple, au moyen d'une diode. Un circuit logique de commande 5 reçoit le signal de sortie V_{C} du comparateur 4 et un signal de commande externe REC/PB déterminant le passage en écriture ou en lecture. Le circuit de commande 5 commande les interrupteurs T_{PB} et T_{REC} d'une manière qui sera expliquée ultérieurement.

L'amplificateur 3 comporte en entrée un transistor NPN, non représenté, branché en émetteur commun dont la base, polarisée par une haute impédance R, constitue l'entrée de l'amplificateur. L'entrée se comporte donc comme une diode D1 reliée à la masse dans le sens passant. De plus, l'entrée est protégée des excursions négatives de tension par une diode D2 reliée à la masse dans le sens inverse. Ainsi, l'amplificateur 3 présente une faible impédance d'entrée pour des tensions d'entrée tendant à être supérieures à V_{BE} (tension de la jonction base-émetteur du transistor) et inférieures à -V_{BE}. Entre ces deux limites, l'amplificateur présente une impédance d'entrée sensiblement égale à l'impédance R.

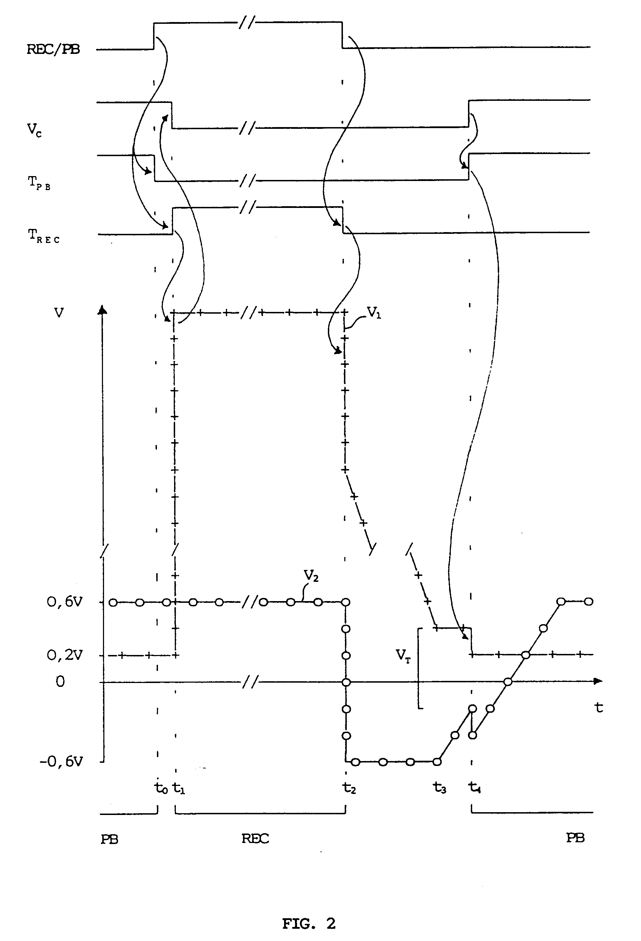

Pour comprendre le fonctionnement de ce circuit, on se réfèrera à la figure 2 dans laquelle :
la courbe REC/PB représente les évolutions du signal logique externe REC/PB dont l'état bas correspond au mode lecture et l'état haut au mode écriture ;
la courbe V_{C} représente les évolutions du signal de sortie V_{C} du comparateur 4, qui est à l'état haut quand la tension V₁-V₂ aux bornes de la capacité CC est inférieure à la tension seuil V_{T} ;
les courbes T_{REC} et T_{PB} représentent respectivement les états des interrupteurs T_{REC} et T_{PB}, l'état haut correspondant à leur fermeture ; et
les courbes V₁ et V₂ représentent respectivement les évolutions des tensions V₁ et V₂. V₁ désigne la tension entre la borne B de la tête 2 et la masse. On considèrera que cette tension est présente aussi à la borne A de la tête 2 car l'impédance de la tête 2 est très faible et on peut négliger la tension entre ses bornes par rapport aux tensions mises en jeu ici. V₂ désigne la tension entre l'entrée et l'amplificateur et la masse.

On considère qu'à un instant initial, le circuit est en mode lecture (PB). Le signal REC/PB est à l'état bas. L'interrupteur T_{REC} est ouvert et l'interrupteur T_{PB} est fermé. La tension V₁ est alors pratiquement nulle, par exemple égale à la tension de saturation (environ 0,2V) d'un transistor bipolaire constituant éventuellement l'interrupteur T_{PB}, et la tension V₂ est égale à la tension V_{BE} imposée par la diode D1 polarisée par l'impédance R. Ainsi V_{C} est à l'état haut car V₁-V₂ est négatif et donc inférieur à V_{T}.

A l'instant t₀ on veut passer en mode écriture (REC). Le signal REC/PB est mis à l'état haut. Le circuit de commande 5 ouvre aussitôt l'interrupteur T_{PB} et ferme l'interrupteur T_{REC} après un intervalle de temps prédéterminé t₁-t₀, par exemple 1 microseconde, pour permettre l'ouverture totale de l'interrupteur T_{PB} avant la fermeture de l'interrupteur T_{REC}.

A l'instant t₁, la tension V₁ grimpe presque instantanément à pratiquement la valeur fixée par la source de tension V_{REC}. La tension V₂ restant constante et égale à V_{BE}. La capacité de couplage CC est alors chargée à V_{REC}-V_{BE}. La tension V₁-V₂ aux bornes de la capacité dépasse alors la tension de seuil V_{T} et la sortie V_{C} du comparateur 4 passe à l'état bas. Le circuit de commande 5 est choisi pour ne pas modifier l'état des interrupteurs T_{REC} et T_{PB} en réponse à cette transition survenant tandis que le signal REC/PB est à l'état haut.

Entre les instants t₁ et t₂ on se trouve ainsi en mode écriture. L'interrupteur T_{REC} est fermé et l'interrupteur T_{PB} est ouvert et la tête 2 est traversée par le courant d'écriture I_{REC}.

A l'instant t₂ on veut passer en mode lecture. Le signal REC/PB est mis à l'état bas et l'interrupteur T_{REC} est aussitôt ouvert, l'interrupteur T_{PB} restant ouvert. La source de courant I_{REC} décharge alors la capacité de couplage CC à travers la diode D2, la tension V₂ chute brusquement de V_{BE} à -V_{BE} et la tension V₁ chute de la même différence (2V_{BE}). La tension V₂ reste constante à -V_{BE} et la tension V₁ chute linéairement jusqu'à un instant t₃, où elle atteint environ 0,4 V, valeur en dessous de laquelle la source de courant modulable ne peut plus fournir un courant constant.

A partir de l'instant t₃, la capacité de couplage CC continue à se décharger, mais à travers l'impédance de polarisation R de l'entrée de l'amplificateur et la source de courant modulable, qui se comporte comme une source de tension d'environ 0,4 V, tant que le courant qui la traverse n'atteint pas son courant nominal. La tension V₁ reste donc constante à environ 0,4 V, la tension V₂ grimpe lentement et la tension V₁-V₂ aux bornes de la capacité atteint la tension seuil V_{T}, ici choisie à environ 0,6 V, à un instant t₄.

A l'instant t₄, le comparateur 4 bascule et sa sortie V_{C} passe à l'état haut. Le circuit de commande 5 est choisi pour fermer alors l'interrupteur T_{PB}. La tension V₁ chute à sa valeur de départ de 0,2 V, ce qui provoque aussi une chute de la tension V₂ de la même différence. La tension V₁ reste constante à 0,2 V et la tension V₂ atteint progressivement la tension de polarisation de l'entrée de l'amplificateur 3, la capacité CC finissant de se décharger, puis se rechargeant en sens inverse à travers l'impédance d'entrée R de l'amplificateur et l'interrupteur T_{PB}.

La tête ne subit jamais à ses bornes la tension V_{REC}, ce qui serait provoqué par une fermeture simultanée des interrupteurs T_{PB} et T_{REC}, et ne subit jamais de pic de courant qui serait provoqué par la décharge de la capacité CC à travers la diode D2 et l'interrupteur T_{PB} fermé quand on passe du mode écriture au mode lecture. On remarquera qu'on a exploité la configuration particulière de l'entrée de l'amplificateur 3 et la capacité de couplage CC pour assurer le fonctionnement du circuit pour le passage du mode écriture en mode lecture, ce qui simplifie beaucoup la configuration du circuit de commande 5 et permet une diminution considérable du nombre de composants nécessaires.

En résumé, le circuit de commande 5 est choisi pour fonctionner de la manière suivante : quand le signal REC/PB est mis à l'état haut, il ouvre aussitôt l'interrupteur T_{PB} et ferme l'interrupteur T_{REC} un intervalle de temps prédéterminé plus tard ; et quand le signal REC/PB est mis à l'état bas, il ouvre aussitôt l'interrupteur T_{REC} et ferme l'interrupteur T_{PB} quand il reçoit un front montant du signal V_{C} provenant du comparateur 4.

Le circuit décrit ici correspond à un mode de réalisation particulier en technologie bipolaire et certaines valeurs numériques citées dépendent de cette technologie. Bien entendu, on peut choisir une technologie mixte MOS-bipolaire si cette solution présente des avantages, tels qu'une simplification de circuit et/ou un gain en superficie, et les valeurs citées dépendant de la technologie seront différentes. L'intervalle de temps t₁-t₀ peut avoir différentes valeurs à condition de couvrir les temps de commutation des interrupteurs. La valeur de la tension de seuil V_{T} peut aussi avoir différentes valeurs à condition que le comparateur bascule entre les instants où la source de courant a fini de décharger la capacité CC (t₃) et où la tension V₂ rejoint la tension V₁.

## Revendications

1. Dispositif de commutation d'une bobine (2) entre un premier état (REC) où elle est connectée entre une source d'alimentation (V_{REC}) et la masse par l'intermédiaire d'une source de courant (I_{REC}) modulable et un second état (PB) où elle est connectée entre la masse et l'entrée d'un amplificateur (3) par l'intermédiaire d'une capacité de couplage (CC), comprenant un premier interrupteur commandé (T_{PB}) connecté en parallèle sur la source de courant (I_{REC}), caractérisé en ce qu'il comprend :
- un deuxième interrupteur commandé (T_{REC}) disposé entre la source d'alimentation (V_{REC}) et la bobine (2) ;
- un comparateur à seuil (4, V_{T}) dont les entrées sont branchées aux bornes de la capacité (CC) ;
- un circuit logique de commande (5) recevant un signal de commande d'état (REC/PB) présentant un front montant ou un front descendant lors d'un changement d'état et le signal de sortie (V_{C}) du comparateur à seuil (4, V_{T}) et pilotant en fonction de ces signaux lesdits interrupteurs (T_{PB}, T_{REC}) alternativement et sans recouvrement à la fermeture.

2. Dispositif de commutation selon la revendication 1, caractérisé en ce que, quand survient un front donné du signal de commande (REC/PB) correspondant à la commande de passage du second état (PB) au premier état (REC), le circuit de commande (5) ouvre aussitôt le premier interrupteur (T_{PB}) et ferme le deuxième interrupteur (T_{REC}) après un intervalle de temps prédéterminé (t₁-t₀).

3. Dispositif de commutation selon la revendication 1, caractérisé en ce que, quand survient l'autre front du signal de commande (REC/PB) correspondant à la commande de passage du premier état (REC) au second état (PB), le circuit de commande (5) ouvre aussitôt le deuxième interrupteur (T_{REC}) et ferme le premier interrupteur (T_{PB}) quand le comparateur à seuil (4, V_{T}) bascule à un état donné.

4. Dispositif de commutation selon la revendication 3, caractérisé en ce que le comparateur à seuil (4, V_{T}) bascule audit état donné quand la tension (V₁-V₂) aux bornes de la capacité de couplage (CC) devient inférieure à une tension seuil positive prédéterminée (V_{T}).

5. Dispositif de commutation selon la revendication 4, caractérisé en ce que la tension (V₁-V₂) aux bornes de la capacité de couplage (CC) atteint la tension de seuil prédéterminée (V_{T}) par valeur décroissante un deuxième intervalle de temps (t₂-t₄) après l'ouverture du deuxième interrupteur (T_{REC}).

6. Dispositif de commutation selon la revendication 5, caractérisé en ce que le deuxième intervalle de temps est la somme d'un troisième intervalle de temps (t₂-t₃) dépendant du temps de décharge de la capacité (CC) à travers la source de courant (I_{REC}) jusqu'à un niveau prédéterminé et d'un quatrième intervalle de temps (t₃-t₄) dépendant du temps de décharge du condensateur (CC) à travers une résistance de polarisation (R) de l'amplificateur (3) jusqu'à ce que la tension (V₁-V₂) aux bornes du condensateur soit égale à la tension de seuil (V_{T}) du comparateur à seuil (4, V_{T}).

## Patentansprüche

1. Schalteinrichtung zum Umschalten einer Spule (2) zwischen einem ersten Zustand (REC), in dem sie zwischen einer Versorgungsquelle (V_{REC}) und, über eine variable Spannungsquelle (I_{REC}), Masse angeschlossen ist, und einem zweiten Zustand (PB), in dem sie zwischen Masse und, über einen Kopplungskondensator (CC), dem Eingang eines Verstärkers (3) angeschlossen ist, mit einem ersten gesteuerten Schalter (T_{PB}), der parallel zu der Stromquelle (I_{REC}) angeschlossen ist, **gekennzeichnet** durch folgende Merkmale:
- einen zweiten gesteuerten Schalter (T_{REC}), der zwischen der Versorgungsquelle (V_{REC}) und der Spule (2) angeordnet ist,
- einen Schwellwertvergleicher (4, V_{T}), dessen Eingänge über dem Kondensator (CC) angeschlossen sind,
- eine logische Steuerschaltung (5), die ein Zustandssteuersignal (REC/PB) mit einer steigenden oder einer fallenden Flanke während einer Änderung des Zustands und das Ausgangssignal (V_{C}) des Schwellwertvergleichers (4, V_{T}) empfängt und, als Funktion der Signale, die Schalter (T_{PB}, T_{REC}) alternativ und, ohne daß sich ihre geschlossenen Zustände überlappen, ansteuert.

2. Schalteinrichtung nach Anspruch 1, dadurch **gekennzeichnet**, daß die Steuerschaltung (5) auf eine vorgegebene Flanke des Steuersignales (REC/PB) anspricht, welche dem Übergangsbefehl vom zweiten Zustand (PB) zum ersten Zustand (REC) entspricht, um sofort den ersten Schalter (T_{PB}) zu öffnen und den zweiten Schalter (T_{REC}) nach einem vorgegebenen Zeitintervall (t₁-t₀) zu schließen.

3. Schalteinrichtung nach Anspruch 1, dadurch **gekennzeichnet**, daß die Steuerschaltung (5) auf die andere Flanke des Steuersignales (REC/PB) anspricht, welche in dem Übergangsbefehl vom ersten Zustand (REC) zum zweiten Zustand (PB) entspricht, um sofort den zweiten Schalter (T_{REC}) zu öffnen und den ersten Schalter (T_{PB}) zu schließen, wenn der Schwellwertvergleicher (4, V_{T}) auf einen vorgegebenen Zustand umschaltet.

4. Schalteinrichtung nach Anspruch 3, dadurch **gekennzeichnet**, daß der Schwellwertvergleicher (4, V_{T}) auf den vorgegebenen Zustand umschaltet, wenn die Spannung (V₁-V₂) über dem Kopplungskondensator (CC) kleiner wird als eine vorgegebene positive Schwellspannung (V_{T}).

5. Schalteinrichtung nach Anspruch 4, dadurch **gekennzeichnet**, daß die Spannung (V₁-V₂) über dem Kopplungskondensator (CC) die vorgegebene Schwellspannung (V_{T}) nach dem Öffnen des zweiten Schalters (T_{REC}) mit einem abnehmenden Wert in einem zweiten Zeitintervall (t₂-t₄) erreicht.

6. Schalteinrichtung nach Anspruch 5, dadurch **gekennzeichnet**, daß das zweite Zeitintervall gleich der Summe aus einem dritten Zeitintervall (t₂-t₃), welches von der Entladezeit des Kondensators (CC) über die Stromquelle (I_{REC}) auf einen vorgegebenen Pegel abhängt, und einem vierten Zeitintervall (t₃-t₄) ist, welches abhängig ist von der Entladezeit des Kondensators (CC) über einen Polarisierungswiderstand (R) des Verstärkers (3), bis die Spannung (V₁-V₂) über dem Kondensator gleich der Schwellspannung (V_{T}) des Schwellwertvergleichers (4, V_{T}) ist.

## Claims

1. A switching device for switching a coil (2) between a first state (REC) where it is connected between a supply source (V_{REC}) and ground through a variable current source (I_{REC}) and a second state (PB) where it is connected between ground and the input of an amplifier (3) through a coupling capacitor (CC) comprising a first controlled switch (T_{PB}) connected in parallel to the current source (I_{REC}), characterized in that it comprises:
- a second controlled switch (T_{REC}) placed between the supply source (V_{REC}) and said coil (2);
- a threshold comparator (4, V_{T}), the inputs of which are connected across the capacitor (CC);
- a logic control circuit (5) receiving a state control signal (REC/PB) having an increasing or decreasing edge during a state change and the output signal (V_{C}) of the threshold comparator (4, V_{T}) and, as a function of said signals, alternatively controlling said switches (T_{PB}, T_{REC}), with no overlapping of their closed states.

2. A switching device according to claim 1, characterized in that said control circuit (5) is responsive to a predetermined edge of the control signal (REC/PB), corresponding to a change command from the second state (PB) to the first state (REC), to immediately open the first switch (T_{PB}) and close the second switch (T_{REC}) after a predetermined time (t₁-t₀).

3. A switching device according to claim 1, wherein, said control circuit is responsive to the other edge of said control signal (REC/PB), corresponding to a change command from the first state (REC) to the second state (PB), to immediately open the second switch (T_{REC}) and close the first switch (T_{PB}) when said threshold comparator (4, V_{T}) switches to a predetermined state.

4. A switching device according to claim 3, characterized in that said threshold comparator (4, VT) switches to the predetermined state when the voltage (V₁-V₂) across the coupling capacitor (CC) becomes lower than a predetermined positive threshold voltage (V_{T}).

5. A switching device according to claim 4, characterized in that said voltage (V₁-V₂) across said coupling capacitor (CC) decreasingly reaches the predetermined threshold voltage (V_{T}) after a second time interval (t₂-t₄) after the opening of the second switch (T_{REC}).

6. A switching device according to claim 5, characterized in that said second time interval is equal to the sum of a third time interval (t₂-t₃) depending on the discharge time of said capacitor (CC) through the current source (I_{REC}) to a predetermined level and of a fourth time interval (t₃-t₄) depending on the discharge time of the capacitor (CC) through a biasing resistor (R) of the amplifier (3) until the voltage (V₁-V₂) across the capacitor is equal to the threshold voltage (V_{T}) of the threshold comparator (4, V_{T}).
